# EUROPÄISCHE PATENTSCHRIFT

(11) **EP 3 287 254 B1**
(45) Veröffentlichungstag und Bekanntmachung des Hinweises auf die Patenterteilung: **03.08.2022**
(21) Anmeldenummer: 17186790.6
(22) Anmeldetag: 18.08.2017
(51) Int. Cl.: B29C 48/36, B29C 48/14, B29C 48/70, B29C 48/07, B29C 48/12, B29C 48/17

(54) **MISCHERSTRUKTUR FÜR EIN FOLIENWERKZEUG UND FOLIENWERKZEUG**
MIXER STRUCTURE FOR A FILM PRODUCING TOOL AND A FILM PRODUCING TOOL
STRUCTURE DE MÉLANGEUR POUR UN OUTIL POUR FILM ET OUTIL POUR FILM

(30) Priorität: 24.08.2016 EP 16185549; 24.08.2016 EP 16185550
(43) Veröffentlichungstag der Anmeldung: 28.02.2018
(73) Patentinhaber: Promix Solutions AG, 8406 Winterthur (CH)
(72) Erfinder: Heusser, Rolf, 8400 Winterthur (CH); Schlummer, Christian, 8400 Winterthur (CH); van Lück, Frank, 47877 Willich (DE)
(74) Vertreter: Herrmann, Johanna

(56) Entgegenhaltungen:
- EP-A1- 0 856 353
- EP-A2- 0 154 013
- WO-A1-2006/024181
- CH-A5- 678 284
- US-A- 4 049 241
- US-A- 4 454 087
- US-A1- 2004 114 461
- US-A1- 2015 087 733

## Beschreibung

Die Erfindung betrifft ein Folienwerkzeug enthaltend eine Mischerstruktur. Ein derartiges Folienwerkzeug wird üblicherweise in einem Extrusionsverfahren zur Erzeugung von Folien verwendet. Diese Folien können eine Schichtdicke von einigen Mikrometern aufweisen. Mittels Folienwerkzeugen können auch Kunststoffplatten mit Schichtdicken von einigen Zentimetern hergestellt werden.

Folienwerkzeuge werden eingesetzt, um eine Kunststoffschmelze von einem kreisförmigen Durchflussquerschnitt auf einen rechteckigen Durchflussquerschnitt mit einer grossen Breite und geringer Dicke zu verteilen. Unter einer grossen Breite wird dabei eine Breite verstanden, die mindestens das Fünffache des Durchmessers des kreisförmigen Durchflussquerschnitts beträgt. Üblicherweise werden sogenannte Kleiderbügelverteiler eingesetzt und Inselfelder als Fliesswiederstand eingebaut, um die Kunststoffschmelze möglichst gleichmässig zu verteilen und die Fliessgeschwindigkeit im Auslassbereich des Folienwerkzeuges möglichst gleichmässig zu halten. An den Abschnitt des Folienwerkzeugs, in welchem eine Ausweitung auf den Durchflussquerschnitt der Mündungsöffnung erfolgt, schliesst ein Abschnitt an, in welchem die Fliesskanalbreite bis zur Mündungsöffnung konstant bleibt. Für die Herstellung von hochwertigen Extrudaten mit engen Schichtdickentoleranzen sollte die Fliessgeschwindigkeit, die Temperaturverteilung und die Schmelzehomogenität über den ganzen Auslassquerschnitt der Mündungsöffnung des Folienwerkzeuges möglichst gleich sein. Die Auslegung der Durchflusskanalgeometrie des Folienwerkzeugs ist daher in der Regel für ein einziges Material, eine einzige Temperatur, einen einzigen Durchsatz optimiert. Daher kann ein Folienwerkzeug idealerweise nur für einen Betriebspunkt optimal ausgelegt werden. Ändern sich der Durchsatz, die Temperatur, die Viskosität oder das verarbeitete Material, müsste idealerweise auch die Geometrie des Fliesskanals angepasst werden, was im Betrieb nicht möglich ist, da das Folienwerkzeug im Betrieb nicht ausgewechselt werden kann.

Speziell für die Herstellung von geschäumten Folien oder Kunststoffplatten mit einer Schichtdicke von mehreren Millimetern ist es schwierig einen genügend hohen Druckverlust über das Werkzeug zu erzeugen, da an den an der Mündungsöffnung des Folienwerkzeugs befindlichen Düsenlippen bedingt durch den grossen Spalt zu wenig Druck aufgebaut werden kann. Zusätzlich weitet sich die Mündungsöffnung je nach Druckverlust auf, das speziell bei breiten Folienwerkzeugen zu Problemen führt. Als Abhilfe werden teilweise sogenannte Staubalken zur Veränderung des Strömungswiderstandes verwendet. Staubalken können eine zusätzliche Barriere für die Kunststoffschmelze ausbilden, wodurch der Durchfluss über den Durchflussquerschnitt beeinflusst werden kann. Insbesondere kann der Durchflussquerschnitt für einzelne Abschnitte des Fliesskanals verändert werden, wozu der Staubalken aus mehreren Segmenten besteht, die derart justiert werden können, dass die Fliesskanaldicke für jedes Segment verändert werden kann. Zudem kann der Druckverlust vor der Mündungsöffnung erhöht werden. Diese Staubalken haben aber den Nachteil, dass sie die Strömung stören, indem sie ungleiche Strömungsgeschwindigkeiten und auch Temperaturunterschiede erzeugen. Zudem ist die Verweilzeitverteilung der Polymere in der Schmelze im Bereich der Staubalken sehr schlecht, was zu Ablagerungen und langen Reinigungszyklen bei Material- und Farbwechseln führt.

Typischerweise wird ein Folienwerkzeug mit elektrischen Heizelementen oder auch mit Öl beheizt. Dieser Wärmeeintrag führt zu Temperaturungleichheiten in der Schmelze, was zu ungleichen Folien- und Plattenschichtdicken und bei geschäumten Extrudaten zu schlechten Schaumstrukturen führt. Wenn die Temperaturverteilung und Strömungsgeschwindigkeit durch einen Staubalken beeinflusst wird, kann dies dazu führen, dass zusätzliche Probleme, wie beispielsweise das Entstehen von Fliesslinien im Extrudat, auftreten können.

Gemäss US 5176925 A oder US2003/0091677 A1 ist bekannt, statische Mischerstrukturen in ein Folienwerkzeug einzubauen, um die Strömung zu vergleichmässigen und die Kunststoffschmelze zu homogenisieren, was sich vorteilhaft auf die Extrudatqualität auswirken kann.

Gemäss US 5176925 A wird eine aus Bolzen bestehende Mischerstruktur auf einer Trägerplatte mit integrierter Formkanalgeometrie vorgeschlagen, die sich über einem Grossteil des sich erweiternden Abschnitts des Folienwerkzeugs zwischen dem Einlassquerschnitt und dem Austrittsquerschnitt des Folienwerkzeugs erstreckt. Dieses Konzept ermöglicht zwar das Öffnen des Folienwerkzeuges zur Reinigung, der Ein- und Ausbau der sehr grossen Trägerplatte ist aber aufwendig und ein Ersatz sehr teuer. Die sehr einfache Mischerstruktur, bestehend aus vertikal zur Fliessrichtung angebrachten Bolzen, erlaubt zudem keine effektive Homogenisierung der Kunststoffschmelze, sodass Fliessmarkierungen im Extrudat auftreten können. Das Polieren der inneren Werkzeugkanalgeometrie, was bei vielen Extrusionsanwendungen vorteilhaft ist, um Ablagerungen des Extrudates zu verhindern, wird zudem durch die vorstehenden Bolzen behindert.

Die US 2003/0091677 A1 schlägt den Einbau von in einem Winkel zur Fliessrichtung angebrachten Stegen und Rohren vor. Solche Strukturen zeigen eine bessere Mischwirkung. US2015/087733 A1 zeigt eine Mischerstruktur, die sich vor einer beliebig ausgestalteten Austrittsdüse befindet. Die Stegelemente der US2015/087733 A1 mit der Innenwand des Mantelelements verschweisst oder als einstückiges Bauelement ausgeführt. EP0856353 A1 zeigt eine statische Mischeinrichtung in einem Rohr, welche zylinderförmige, den vom Rohr ausgebildeten Innenraum traversierende Stegelemente aufweist, die mit der Rohrinnenwand unlösbar verbunden sind. Eine ähnliche Anordnung ist auch der JPH07 251435 A zu entnehmen.

Es wird aber in diesen Dokumenten nicht offenbart, wie diese Strukturen in ein Folienwerkzeug eingebaut werden sollen, um eine einfache Reinigung und eine einfache Montage oder einen Austausch der Mischerstruktur zu gewährleisten. Die Rohre, in denen gegebenenfalls ein Wärmeträgerfluid fliesst, müssen mit den Werkzeughälften verbunden sein, was das Öffnen des Werkzeuges und dessen Reinigung verunmöglicht.

In der US4454087 A1 wird ein statischer Mischer in einem Rohr offenbart, der von einem Halteelement im Fliesskanal gehalten ist. Dieses Halteelement ist stromabwärts des statischen Mischers angeordnet und hat einerseits den Nachteil, dass es in den Fliesskanal hineinragt, das heisst, die Strömung stört und andererseits die Gesamtlänge des statischen Mischers im Mischkanal vergrössert.

Das Dokument DE2534734 A1 zeigt ein Breitschlitzdüsenwerkzeug mit Zuführkanälen für Farben, die an beliebigen Stellen senkrecht zur Strömungsrichtung der Grundfarbmasse über die Breite und Dicke dieser Grundfarbmasse in der Vorlaufzone des Breitschlitzdüsenwerkzeugs eingespeist werden. Diese Zuführkanäle dienen zum Eintrag von Farben in eine thermoplastische Kunststoffmasse und sind als Rohrstümpfe ausgebildet, die einen oder mehrere Farbkanäle enthalten. Diese Rohrstümpfe ragen in die thermoplastische Kunststoffmasse hinein, sodass die Farben nicht nur auf der Oberfläche der thermoplastischen Kunststoffmasse eingebracht werden, sondern über die gesamte Dicke um eine Musterbildung zu erhalten. In dieser Anwendung sollen daher die verschiedenfarbigen Stränge klar erkennbar bleiben, das heisst, es soll keine Vermischung der Farbe mit der thermoplastischen Kunststoffmasse erfolgen. Daher haben die Farbeintragskanäle nicht die Funktion eines statischen Mischers.

Weitere Ausführungsbeispiele für statische Mischer, die für Extruder oder Spritzgiessverfahren eingesetzt werden können, sind aus der US2004/114461 A1 bekannt. Statische Mischer, die speziell für Spritzgiessmaschinen eingesetzt werden, sind aus der EP 0 154 013 A2 sowie der WO2006/024181 A1 bekannt. Keines dieser Dokumente liefert einen Hinweis auf ein Folienwerkzeug enthaltend eine Mischerstruktur.

Aufgabe der Erfindung ist es daher, die Mischerstruktur im Folienwerkzeug so zu befestigen, dass die Zugänglichkeit und die Reinigung des Folienwerkzeuges gewährleistet ist, eine einfache Montage oder ein Austausch und Reinigung der Mischerstruktur möglich ist. Der Einbau der Mischerstruktur führt bei geringstmöglicher Mischerlänge zu Extrudaten von hoher Qualität. Unter einer hohen Qualität des Extrudats wird eine homogene Mischung aller Komponenten verstanden.

Ein Sonderfall der Verwendung eines Folienwerkzeugs ist die Herstellung von geschäumten Folien und/oder Platten aus einer Kunststoffschmelze, der ein oder mehrere chemische und/ oder physikalische Treibmittel zugegeben worden sind. Der Schäumprozess erfolgt dabei typischerweise im Auslassbereich des Folienwerkzeugs oder direkt nach dem Austritt der Kunststoffschmelze aus der Mündungsöffnung des Folienwerkzeugs. Zur Herstellung von qualitativ hochwertigen geschäumten Produkten werden hohe Druckverluste in der Mündungsöffnung des Folienwerkzeugs benötigt, die insbesondere bei der Verarbeitung von Kunststoffschmelzen mit niedrigeren Viskositäten, zum Beispiel bei der Verarbeitung von PET-Schmelze und oder bei der Herstellung von Extrudaten mit 2 - 20 mm Extrudatdicke nicht erreicht werden können. Zudem ist die Einhaltung einer konstanten Temperatur und einer gleichmässigen Strömungsgeschwindigkeit an der Mündungsöffnung des Folienwerkzeuges für ein gleichmässiges Aufschäumen und qualitativ hochwertige geschäumte Extrudate erforderlich. Daher können mit herkömmlichen Folienwerkzeugen nur bedingt hochwertig geschäumte Extrudate hergestellt werden.

Aufgabe der Erfindung ist es, ein kostengünstiges Folienwerkzeug herzustellen, um weitgehend prozesspunktunabhängig qualitativ hochwertige Extrudate mit engen Schichtdickentoleranzen herzustellen, insbesondere geschäumte Extrudate mit sehr gleichmässiger, feiner Zellstruktur herzustellen.

Die Lösung der Aufgaben der Erfindung erfolgt durch ein Folienwerkzeug gemäss Anspruch 1. Vorteilhafte Varianten des Folienwerkzeugs sind Gegenstand der abhängigen Ansprüche 2 bis 15.

Ein Folienwerkzeug für eine Kunststoffschmelze enthält eine Mischerstruktur umfassend eine Mehrzahl von Stegelementen, umfassend ein erstes Stegelement und ein zweites Stegelement. Die Mischerstruktur dient zur Anordnung in einem vom Folienwerkzeug gebildeten Fliesskanal für die Kunststoffschmelze, wobei der Fliesskanal im Betriebszustand von der Kunststoffschmelze in einer Fliessrichtung durchströmbar ist. Die Fliessrichtung ist im Wesentlichen parallel zu einer Längsachse des Fliesskanals angeordnet. Die Längsachse ist die kürzeste Verbindungslinie im Fliesskanal zwischen einer Eintrittsöffnung und einer Austrittsöffnung des Folienwerkzeugs. Zumindest eines der ersten Stegelemente und der zweiten Stegelemente enthalten zumindest ein Ende, welches mit einem Sockel verbunden ist, der zur Aufnahme in der Innenwand des Folienwerkzeugs bestimmt ist. Der Sockel weist eine Breite B in Fliessrichtung auf, die kleiner oder gleich der Projektionslänge I zumindest eines der ersten und zweiten Stegelemente in Fliessrichtung ist. Der Sockel schliesst in der Normalrichtung zur Fliessrichtung an zumindest das Ende des ersten oder zweiten Stegelements an, sodass der Sockel das Ende des ersten oder zweiten Stegelements in der Normalrichtung zur Fliessrichtung überragt. Der Sockel umgibt zumindest abschnittweise zumindest eines der ersten und zweiten Stegelemente. Zumindest eines der ersten oder zweiten Stegelemente ist im zumindest teilweise im Sockel aufgenommen. Insbesondere befindet sich zumindest eines der ersten oder zweiten Stegelemente zumindest teilweise innerhalb des Sockels.

Erfindungsgemäss erfolgt die Montage der Mischerstruktur im Folienwerkzeug über den oder die an der Mischerstruktur angebrachten Sockel, der/die in zumindest eines der Werkzeugelemente eingreift/eingreifen oder an zumindest einem der Werkzeugelemente befestigt ist/sind. Der Sockel kann kraftschlüssig, zum Beispiel durch Verschrauben mit zumindest einem der ersten oder zweiten Werkzeugelement verbunden sein. Der Sockel kann ein Befestigungsmittel zur Verbindung mit einem Werkzeugelement enthalten. Der Abstand zwischen dem Ende des ersten Stegelements und dem Ende des zweiten Stegelements kann im Wesentlichen der Breite B des Sockels entsprechen. Diese Sockel haben somit Einbaumasse, die vorteilhafterweise im Wesentlichen von ähnlicher Grösse wie die Projektionsfläche der einzubauenden Mischerstruktur sind. Insbesondere sind die Sockelprojektionsflächen nicht grösser als 10-mal, vorzugsweise nicht grösser als 6-mal, besonders bevorzugt nicht grösser als 3-mal der Projektionsfläche der Mischerstruktur. Nach einem Ausführungsbeispiel weist somit die Mischerstruktur eine Mischerstrukturprojektionsfläche auf, der Sockel weist eine Sockelprojektionsfläche auf, wobei die Mischerstrukturprojektionsfläche und die Sockelprojektionsfläche normal zur Fliesskanaldicke FH ausgerichtet sind, wobei die Sockelprojektionsfläche nicht grösser als 10-mal der Mischerstrukturprojektionsfläche ist. Die Mischerstruktur kann entweder nur auf einer Seite ober aber vorteilhafterweise auf beiden, den beiden Werkzeugelementen zugewandten Seiten, mit einem Sockel versehen sein. Nach einem Ausführungsbeispiel ist jedes der Enden der ersten und zweiten Stegelemente mit einem Sockel verbunden.

Dadurch lassen sich durch den Druckverlust in der Mischerstruktur entstehende Kräfte gleichmässig in die Werkzeugelemente einleiten.

Insbesondere kann der Sockel an das Ende des ersten Stegelements und/oder das Ende des zweiten Stegelements normal zur Fliessrichtung anschliessen, sodass der Sockel sich ausserhalb der Mischerstruktur befindet, wobei die Projektionslänge I der Mischerstruktur in Fliessrichtung der Projektion der Stegelemente in Richtung der Längsachse entspricht.

Eine Mehrzahl von ersten und zweiten Stegelementen kann im Fliesskanal nebeneinanderliegend angeordnet sein, sodass sie von der Kunststoffmasse im Wesentlichen gleichzeitig anströmbar sind. Nach einem Ausführungsbeispiel können mindestens je 5 erste und zweite Stegelemente nebeneinanderliegend im Fliesskanal angeordnet sein. Die Breite des Fliesskanals kann mindestens das fünffache der Dicke des Fliesskanals betragen. Dieses Ausführungsbeispiel ist insbesondere für die Herstellung von plattenförmigen Extrudaten geeignet. Nach einem Ausführungsbeispiel kann die Breite des Fliesskanals mindestens das Zehnfache der Dicke des Fliesskanals betragen. Insbesondere können mindestens je 10 erste und zweite Stegelemente nebeneinanderliegend im Fliesskanal angeordnet sein. Mit nebeneinanderliegend ist hierbei gemeint, dass die Stegelemente im Wesentlichen gleichzeitig von der Kunststoffschmelze angeströmt werden.

Ein Folienwerkzeug enthält ein erstes Werkzeugelement, ein zweites Werkzeugelement, einen sich zwischen dem ersten Werkzeugelement und dem zweiten Werkzeugelement erstreckenden Fliesskanal für eine Kunststoffschmelze, wobei im Fliesskanal eine Mischerstruktur, welche zumindest ein erstes Stegelement und ein zweites Stegelement enthält. Die Mischerstruktur ist in zumindest einem der Werkzeugelemente mittels eines Halteelements gehalten. Die Projektionslänge I der Mischerstruktur ist grösser oder im Wesentlichen gleich der Breite B des Halteelements. Das erste Stegelement kann in einem Winkel zum zweiten Stegelement angeordnet sein, wobei der Winkel zwischen dem ersten und zweiten Stegelement zwischen 25 Grad und 75 Grad betragen kann.

Das erste Stegelement und das zweite Stegelement können zumindest ein Kopplungselement zur Ausbildung der Mischerstruktur aufweisen. Das Kopplungselement kann ein Element aus der Gruppe der Schweissverbindungen, Lötverbindungen, Schraubverbindungen, Nietverbindungen, Rohrelemente, Stabelemente, Klammern, Gussübergänge enthalten.

Nach einem Ausführungsbeispiel ist der Sockel mit dem Werkzeugelement durch ein Befestigungsmittel verbindbar, beispielsweise verschraubt. Das Befestigungsmittel kann insbesondere eine lösbare Verbindung ausbilden, beispielsweise kann der Sockel mit dem Werkzeugelement durch eine Schraubverbindung verbunden sein. Die Schraubverbindung erfolgt vorteilhafterweise von aussen, das heisst von der Aussenseite des Werkzeugelements. Bei einer beidseitigen Verschraubung kann das erste Werkzeugelement mit dem zweiten Werkzeugelement über die Mischerstruktur verbunden werden, sodass über diese Verbindung Kraft übertragen werden kann. Diese Variante hat den Vorteil, dass ein Aufdrücken des Folienwerkzeuges bei einem Betrieb unter hohen Drücken vermieden werden kann. Dies ist speziell bei Folienwerkzeugen mit sehr grosser Austragsbreite von grossem Vorteil und erlaubt Werkzeugelemente mit geringerer Wandstärke einzusetzen. Ein Nachstellen des Düsenspaltes bei sich verändernden Drücken entfällt. Dank der Mischerstruktur können auch Mehrschichtfolienwerkzeuge einfacherer Bauart hergestellt werden, bei denen mehrere Schichten von Kunststoff durch separate Zuführkanäle im Folienwerkzeug zugegeben und auf die Austragsbreite verteilt werden, um ein Extrudat mit mehr als einer Kunststoffschicht zu erhalten. Die Mischerstruktur ist dabei vor dem Zusammenfliessen der Schichten angebracht und kann entweder nur in einer Schicht oder aber in mehreren Schichten angebracht sein.

Die Mischerstruktur kann sich über den ganzen Durchflussquerschnitt des Fliesskanals erstrecken. Der Durchflussquerschnitt des Fliesskanals ist durch die Fliesskanaldicke FH und die Fliesskanalbreite FB bestimmt. Nach einem Ausführungsbeispiel erstreckt sich die Mischerstruktur über die Fliesskanalbreite des Folienwerkzeugs. Das erste und zweite Werkzeugelement können eine Eintrittsöffnung und eine Mündungsöffnung enthalten. Der Fliesskanal kann eine Fliesskanallänge FL aufweisen, die sich als kürzeste Verbindungslinie von der Eintrittsöffnung bis zur Mündungsöffnung erstreckt. Der Fliesskanal kann eine Fliesskanaldicke FH aufweisen, welche durch den Normalabstand des ersten Werkzeugelements vom zweiten Werkzeugelement ausgebildet ist, sowie eine Fliesskanalbreite FB, welche normal zur Fliesskanaldicke FH und zur Fliesskanallänge FL ausgerichtet ist. Die Fliesskanallänge FL wird somit von der oder den Eintrittsöffnungen der Kunststoffschmelze in den Fliesskanal bis zur Mündungsöffnung des Fliesskanals gemessen. Die Fliessrichtung der Kunststoffschmelze erfolgt von der oder den Eintrittsöffnungen zur Mündungsöffnung. Die Fliesskanaldicke FH kann sich an verschiedenen Punkten der Fliesskanallänge FL unterscheiden. Die Fliesskanalbreite FB kann sich an verschiedenen Punkten der Fliesskanallänge FL unterscheiden. Insbesondere kann die Fliesskanalbreite FB an der Mündungsöffnung grösser als an der Eintrittsöffnung sein.

Eine Mischerstruktur kann als Band ausgebildet sein. Dieses Band kann aus einer Mehrzahl von Stegelementen bestehen, wenn die Mischerstruktur eine Mehrzahl von Stegelementen enthält. Ein derartiges Band ist vorteilhafterweise im rechten Winkel zur Fliessrichtung der Kunststoffschmelze angeordnet. In zumindest einem der Werkzeugelemente kann eine entsprechende Ausnehmung, beispielsweise ein Schlitz, vorgesehen werden. Der Sockel kann in der Ausnehmung aufgenommen sein. Der Sockel und die Ausnehmung können als Passsitz ausgeführt sein.

Die Mischerstruktur kann ein aus mehreren Bandsegmenten bestehendes Band enthalten. Die Verwendung von Bandsegmenten erlaubt eine einfache Montage oder Demontage und auch eine einfache Reinigung der demontierten Mischerstrukturen respektive deren Ersatz. Die Reinigung von Mischerstrukturen erfolgt beispielsweise in einem Ofen, teilweise unter Vakuum. Entsprechend vorteilhaft ist die Reinigung von ausbaubaren Mischerstrukturen, die beispielsweise als Bänder und/oder Bandsegmente ausgebildet sind. Es hat sich gezeigt, dass eine Mischerstruktur vorteilhafterweise eine Einbaubreite aufweist, die weniger als 10mal, insbesondere weniger als 5mal, vorzugsweise maximal 2mal der Fliesskanaldicke FH entspricht. Die Einbaubreite wird in einer Normalebene zur Fliesskanalbreite FB gemessen. Die Einbaubreite kann im Wesentlichen der Breite B entsprechen. Es können mehrere Mischerstrukturen parallel zueinander angeordnet werden. Die Mischerstrukturen können parallel zur Fliesskanalbreite FB angeordnet sein. Benachbarte Mischerstrukturen können einen Abstand zueinander aufweisen. Das heisst, in Richtung der Fliesskanallänge gesehen, sind die Mischerstrukturen hintereinander angebracht.

Die Fliesskanalbreite FB kann von der Eintrittsöffnung zur Mündungsöffnung zumindest abschnittweise zunehmen. Die Fliesskanalbreite kann stromaufwärts der Mündungsöffnung in einem Fliesskanalabschnitt konstant sein. Der Fliesskanalabschnitt mit konstanter Fliesskanalbreite kann bis zu 50% der Fliesskanallänge FL ausmachen. Eine Mischerstruktur kann im Fliesskanalabschnitt mit konstanter Fliesskanalbreite angeordnet sein. Eine Mischerstruktur kann im sich ausweitenden Fliesskanallängenabschnitt angeordnet sein. Der Fliesskanalabschnitt mit konstanter Fliesskanalbreite ist vorzugsweise stromaufwärts der Mündungsöffnung angeordnet.

Eine Mischerstruktur kann im sich ausweitenden Fliesskanalabschnitt angeordnet sein. Zur besseren Verteilung der Kunststoffschmelze von der Eintrittsöffnung zur Mündungsöffnung kann ein Leitelement im Fliesskanal angebracht sein. Das Leitelement kann als Inselfeld und/ oder als Staubalken ausgebildet sein. Ein Staubalken kann zusätzlich eine Regulierung der Drücke und Durchflüsse ermöglichen. Ein Inselfeld kann die Vorverteilung der Kunststoffschmelze verbessern. Die Mischerstruktur kann stromaufwärts oder stromabwärts des Leitelements eingebaut werden. Die Mischerstruktur kann im Abschnitt konstanter Fliesskanalbreite angebracht sein, wobei die Kunststoffschmelze durch ein Leitelement auf den Austrittsquerschnitt vorverteilt ist. Diese Vorverteilung erfolgt vorteilhafterweise durch ein Inselfeld. Ein Inselfeld umfasst eine im Fliesskanal angebrachte Erhebung, die in Fliessrichtung einen Widerstand erzeugt und so die Kunststoffschmelze auf den gesamten Austrittsquerschnitt gleichmässig vorverteilt. Es hat sich gezeigt, dass insbesondere die Kombination des Inselfeldes mit einer Mischerstruktur zu einer weitgehend prozesspunktunabhängigen, gleichmässigen Strömung führt.

Es hat sich gezeigt, dass es vorteilhaft ist, für eine gute Durchmischung und entsprechend zum Erreichen von qualitativ hochstehenden Extrudaten eine Mischerstruktur enthaltend ein erstes und ein zweites Stegelement einzusetzen. Das Anbringen von einfachen Bolzen, die senkrecht zur Fliessrichtung stehen, wie beispielsweise in der US5176925A gezeigt, führt oft zu Fliessmarkierungen in den Extrudaten. Es hat sich gezeigt, dass sich besonders eine Mischerstruktur eignet, die eine Mehrzahl von sich kreuzenden Stegelementen enthält.

Es hat sich erstaunlicherweise auch gezeigt, dass die Verwendung von ersten und zweiten Stegelementen zwischen dem Sockel und dem Werkzeugelement nicht zu Ablagerungen und/oder Fliessmarkierungen im Extrudat führt. Dies hängt damit zusammen, dass beim Einsatz von erfindungsgemässen Mischerstrukturen eine gleichmässige Strömungsgeschwindigkeit über die gesamte Fliesskanalbreite FB und/oder über die gesamte Fliesskanaldicke FH erzeugt werden kann. Entsprechend ist es auch möglich, eine Mischerstruktur in der Nähe der Mündungsöffnung anzubringen. Insbesondere kann die Mischerstruktur im Bereich der Austragslippen angebracht werden. Die Mischerstruktur kann weniger als 10 cm, insbesondere weniger als 6 cm, bevorzugt weniger als 4 cm, besonders bevorzugt weniger als 2 cm stromaufwärts der Mündungsöffnung angebracht werden. Das Anbringen von kraftübertragenden Mischerstrukturen in der Nähe der Mündungsöffnung ist besonders vorteilhaft, da dort ein Aufdrücken des Werkzeugspaltes verhindert werden soll.

Selbst die Montage der Sockel durch Schrauben von der Innenseite an die Werkzeugelemente ist möglich, solange die Verschraubungen im Bereich der Mischerstrukturen liegen und zum Beispiel weniger als 3-mal die Spaltbreite, respektive der Mischerhöhe von der Mischerstruktur entfernt angebracht sind.

Der Mündungsöffnung kann ein Element aus der Gruppe der Spalte, verstellbaren Spalte, Flexlippen, Lochplatten zur Erzeugung von höheren Druckgradienten enthalten.

Der Kunststoffschmelze kann auch ein Treibmittel zugegeben werden, um ein schäumbares oder geschäumtes Extrudat herzustellen. Das Treibmittel kann ein Element der Gruppe der chemischen oder physikalischen Treibmittel enthalten. Der Schäumprozess kann unmittelbar stromaufwärts oder stromabwärts der Mündungsöffnung erfolgen. Zur Herstellung von feinzelligen Schäumen ist es vorteilhaft, hohe Druckgradienten im Bereich der Mündungsöffnung zu erzeugen. Ein hoher Druckgradient entspricht einem Druckunterschied von 50 bis 100 bar. Der Einsatz von Mischerstrukturen nahe der Mündungsöffnung kann den Druckgradienten wesentlich erhöhen, was zu einer wesentlichen Verbesserung der Zellstruktur und Feinzelligkeit führt. Es hat sich gezeigt, dass das Anbringen der Mischerstruktur im Fliesskanalabschnitt einer konstanten Fliesskanalbreite, also in der sogenannten Beruhigungszone am vorteilhaftesten ist, da keine störenden Querströmungen mehr auftreten.

Die Mischerstruktur und der Sockel können monolithisch durch geeignete Giessverfahren oder durch additive Herstellungsverfahren hergestellt werden. Die Sockel können nach einem Ausführungsbeispiel separat hergestellt werden und zum Beispiel durch Löten oder Schweissen mit der Mischerstruktur verbunden werden.

Vorteilhafterweise beträgt die Abweichung der minimalen Strömungsgeschwindigkeit und Temperatur von der maximalen Strömungsgeschwindigkeit und Temperatur bei Verwendung einer Mischerstruktur nach einem der vorhergehenden Ausführungsbeispiele nicht mehr als je 10% von der Durchschnittsgeschwindigkeit respektive Durchschnittstemperatur, mit welcher die Kunststoffschmelze die Mischerstruktur verlässt. Das aus der Kunststoffschmelze erhältliche Extrudat weist daher in der Mündungsöffnung keine inhomogene Oberfläche, keine Fehlstellen oder Schlieren auf, sodass eine konstant gute Produktqualität, eine gleichmässige Schichtdicke und gegebenenfalls eine präzise Schäumbarkeit der Kunststoffschmelze, gewährleistet werden kann.

Es hat sich gezeigt, dass das Anbringen einer geeigneten Mischerstruktur zu einer sehr homogenen Kunststoffschmelze mit gleichmässiger Temperaturverteilung und gleichmässiger Strömungsgeschwindigkeit insbesondere in einem weiten Verwendungsbereich unabhängig vom Prozesspunkt führt, das heisst unabhängig von Durchsatz, Schmelzeviskosität, Schmelzetemperatur und Polymerzusammensetzung.

Nachfolgend wird die erfindungsgemässe Vorrichtung anhand einiger Ausführungsbeispiele dargestellt. Es zeigen
Fig. 1 einen Schnitt durch ein Folienwerkzeug nach einem ersten Ausführungsbeispiel,
Fig. 2 einen Schnitt durch ein Folienwerkzeug nach einem zweiten Ausführungsbeispiel,
Fig. 3 einen Schnitt durch ein Folienwerkzeug nach einem dritten Ausführungsbeispiel,
Fig. 4 einen Schnitt durch ein Folienwerkzeug nach einem vierten Ausführungsbeispiel,
Fig. 5 eine Draufsicht auf ein Folienwerkzeug nach einer ersten Variante,
Fig. 6 eine Draufsicht auf ein Folienwerkzeug nach einer zweiten Variante,
Fig. 7 eine Draufsicht auf ein Folienwerkzeug nach einer dritten Variante,
Fig. 8 einen Extruder enthaltend ein Folienwerkzeug,

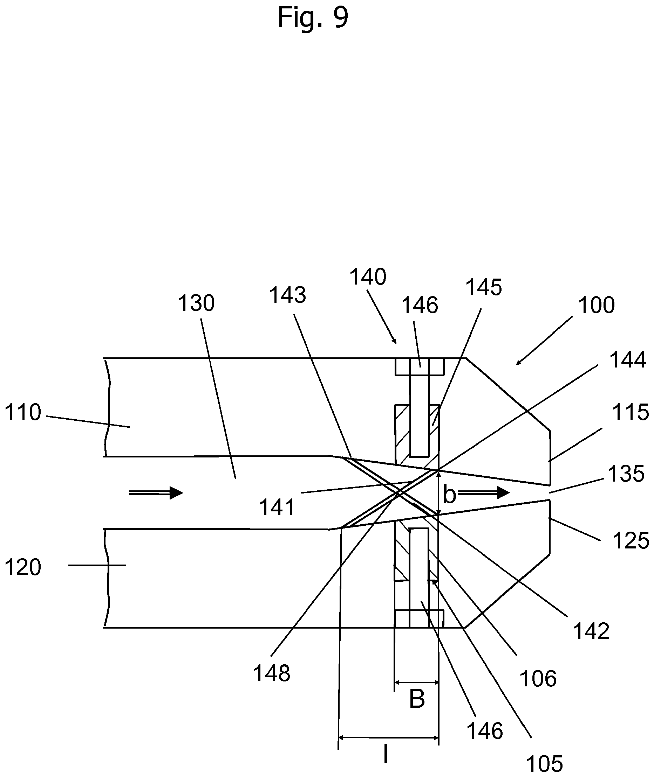

Fig. 9 eine Variante der Fig. 2.

Ein Folienwerkzeug 1 gemäss einem ersten Ausführungsbeispiel der Erfindung enthält ein erstes Werkzeugelement 10, ein zweites Werkzeugelement 20, einen sich zwischen dem ersten Werkzeugelement 10 und dem zweiten Werkzeugelement 20 erstreckenden Fliesskanal 30 für eine Kunststoffschmelze. Im Fliesskanal 30 ist eine Mischerstruktur 40, welche zumindest ein erstes Stegelement 41 und ein zweites Stegelement 42 enthält, angeordnet. Das erste Stegelement 41 ist in einem Winkel zum zweiten Stegelement 42 angeordnet, wobei der Winkel zwischen dem ersten und zweiten Stegelement 41, 42 zwischen 25 Grad und 75 Grad betragen kann. Das erste Stegelement 41 und das zweite Stegelement 42 können zumindest ein Kopplungselement 48 zur Ausbildung der Mischerstruktur aufweisen. Das Kopplungselement 48 kann ein Element aus der Gruppe der Schweissverbindungen, Lötverbindungen, Schraubverbindungen, Nietverbindungen, Rohrelemente, Stabelemente, Klammern, Gussübergänge enthalten. Das erste Stegelement 41 ist insbesondere kreuzweise zum zweiten Stegelement 42 angeordnet. Das Kopplungselement kann im Kreuzungspunkt angeordnet sein oder den Kreuzungspunkt der Stegelemente 41, 42 ausbilden. Die Mischerstruktur 40 weist mindestens einen Sockel 45 auf, wobei das erste Stegelement 41 und das zweite Stegelement 42 zumindest ein Ende 43, 44 enthalten, welches mit dem Sockel 45 verbunden ist, wobei der Sockel 45 an zumindest einem der ersten oder zweiten Werkzeugelemente 10, 20 befestigt ist. Insbesondere kann ein Befestigungsmittel 46 vorgesehen sein, mittels welchem der Sockel 45 lösbar auf dem ersten oder zweiten Werkzeugelemente 10, 20 befestigt ist. Das Befestigungsmittel 46 kann eine Schraube umfassen. Das Befestigungsmittel 46 kann von der Aussenseite des Werkzeugelements 10, 20 betätigt werden.

Der Abstand zwischen dem Ende 43 des ersten Stegelements 41 und dem Ende 44 des zweiten Stegelements 42 kann im Wesentlichen der Breite B des Sockels 45 entsprechen. Jedes der Enden 43, 44 der ersten und zweiten Stegelemente 41, 42 kann mit je einem Sockel 45 verbunden sein. Die Mischerstruktur 40 ist in zumindest einem der Werkzeugelemente 10, 20 mittels eines Halteelements 5 gehalten. Das Halteelement 5 ist gemäss diesem Ausführungsbeispiel als eine Ausnehmung 6 ausgebildet, welche zur Aufnahme des Sockels 45 ausgebildet ist.

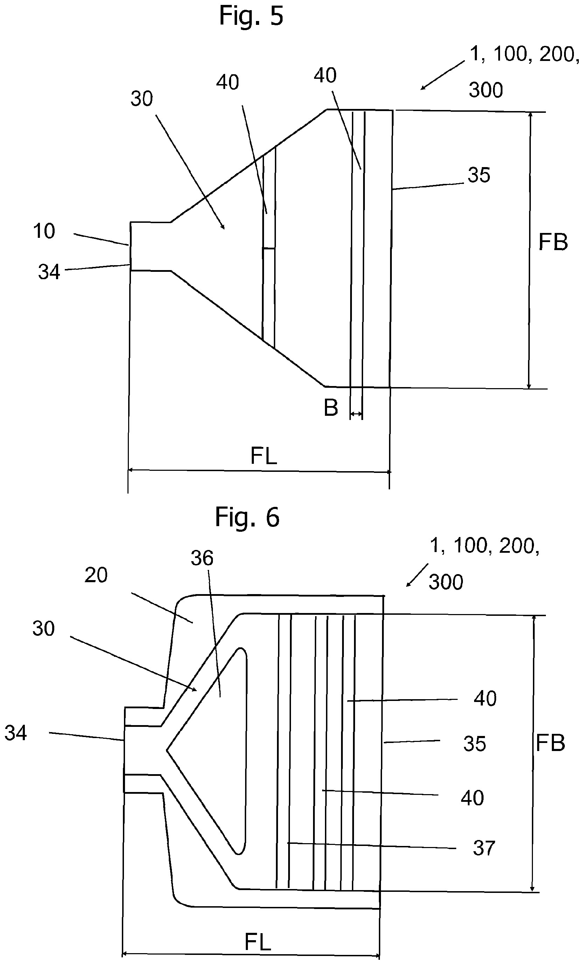

Das erste und zweite Werkzeugelement 10, 20 enthalten eine Eintrittsöffnung 34 und eine Mündungsöffnung 35. Der Fliesskanal 30 weist insbesondere eine Fliesskanallänge FL auf, die sich als kürzeste Verbindungslinie von der Eintrittsöffnung 34 bis zur Mündungsöffnung 35 erstreckt. Der Fliesskanal 30 weist eine Fliesskanaldicke FH auf, welche durch den Normalabstand des ersten Werkzeugelements 10 vom zweiten Werkzeugelement 20 ausgebildet ist, sowie eine Fliesskanalbreite FB, welche normal zur Fliesskanaldicke FH und zur Fliesskanallänge FL ausgerichtet ist. Die Fliesskanalbreite FB ist in einer der Fig. 5, 6, 7 sichtbar.

Die Fliesskanaldicke FH in der Mündungsöffnung 35 ist kleiner als in der Eintrittsöffnung 34. Die Mündungsöffnung 35 bildet eine Flachdüse aus. Die Innenflächen es ersten und zweiten Werkzeugelements 10, 20 können parallel zueinander verlaufen, sie können aber auch zueinander geneigt sein.

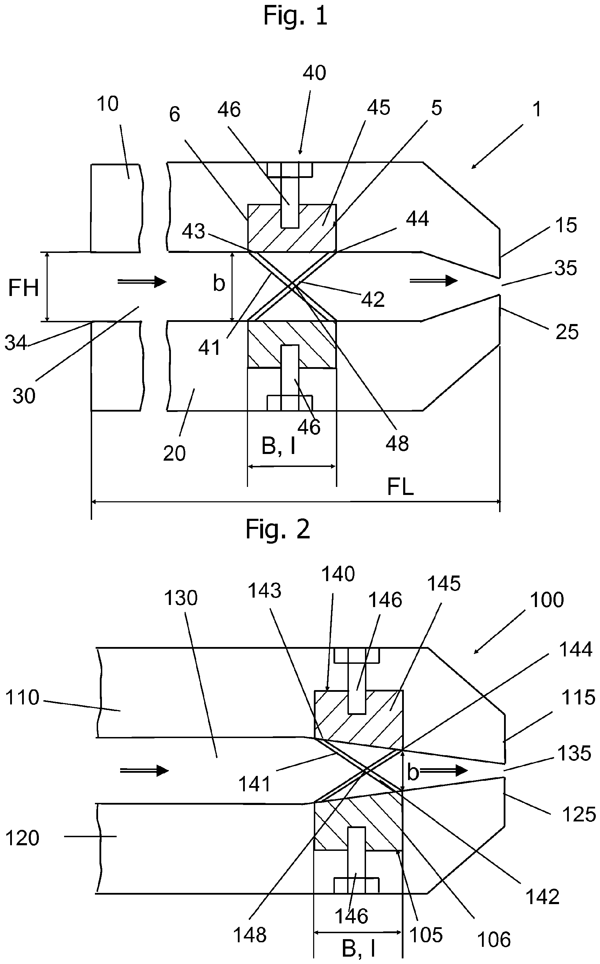

Fig. 2 zeigt einen Schnitt durch ein Folienwerkzeug 100 nach einem zweiten Ausführungsbeispiel, welches sich vom Folienwerkzeug gemäss Fig. 1 dahingehend unterscheidet, dass die Mischerstruktur 140 näher an der Mündungsöffnung 135 angeordnet ist. Ein Folienwerkzeug 100 gemäss dem zweiten Ausführungsbeispiel der Erfindung enthält ein erstes Werkzeugelement 110, ein zweites Werkzeugelement 120, einen sich zwischen dem ersten Werkzeugelement 110 und dem zweiten Werkzeugelement 120 erstreckenden Fliesskanal 130 für eine Kunststoffschmelze. Im Fliesskanal 130 ist eine Mischerstruktur 140, welche zumindest ein erstes Stegelement 141 und ein zweites Stegelement 142 enthält, angeordnet. Das erste Stegelement 141 ist in einem Winkel zum zweiten Stegelement 142 angeordnet, wobei der Winkel zwischen dem ersten und zweiten Stegelement 141, 142 zwischen 25 Grad und 75 Grad betragen kann. Das erste Stegelement 141 und das zweite Stegelement 142 können zumindest ein Kopplungselement 148 zur Ausbildung der Mischerstruktur 140 aufweisen. Das erste Stegelement 141 ist insbesondere kreuzweise zum zweiten Stegelement 142 angeordnet. Das Kopplungselement 148 kann im Kreuzungspunkt angeordnet sein oder den Kreuzungspunkt der Stegelemente 141, 142 ausbilden. Der Kreuzungspunkt teilt wie im vorhergehenden Ausführungsbeispiel jedes der Stegelemente 141, 142 in zwei Teilelemente, allerdings sind die Schenkel der Teilelemente jedes Stegelements 141, 142 ungleich lang.

Die Mischerstruktur 140 weist zwei Sockel 145 auf. Die der Kunststoffschmelze zugewendeten Oberflächen der Sockel 145 weisen eine Neigung auf, welche der Neigung der Innenflächen der ersten und zweiten Werkzeugelemente 110, 120 entspricht. Das erste Stegelement 141 und das zweite Stegelement 142 enthalten zumindest ein Ende 143, 144, welches mit dem Sockel 145 verbunden ist, wobei der Sockel 145 an zumindest einem der ersten oder zweiten Werkzeugelemente 110, 120 befestigt ist. Insbesondere kann ein Befestigungsmittel 146 vorgesehen sein, mittels welchem der Sockel 145 lösbar auf dem ersten oder zweiten Werkzeugelement 110, 120 befestigt ist. Das Befestigungsmittel 146 kann eine Schraube umfassen. Das Befestigungsmittel 146 kann von der Aussenseite des Werkzeugelements 110, 120 betätigt werden.

Der Abstand zwischen dem Ende 143 des ersten Stegelements 141 und dem Ende 144 des zweiten Stegelements 142 kann im Wesentlichen der Breite B des Sockels 145 entsprechen. Jedes der Enden 143, 144 der ersten und zweiten Stegelemente 141, 142 kann mit je einem Sockel 145 verbunden sein. Die Mischerstruktur 140 ist in zumindest einem der Werkzeugelemente 110, 120 mittels eines Halteelements 105 gehalten. Das Halteelement 105 ist gemäss diesem Ausführungsbeispiel als eine Ausnehmung 106 ausgebildet, welche zur Aufnahme des Sockels 145 ausgebildet ist.

Das erste und zweite Werkzeugelement 110, 120 enthalten eine Eintrittsöffnung 134 und eine Mündungsöffnung 135. Der Fliesskanal 130 weist insbesondere eine Fliesskanallänge FL auf, die sich als kürzeste Verbindungslinie von der Eintrittsöffnung 134 bis zur Mündungsöffnung 135 erstreckt. Der Fliesskanal 130 weist eine Fliesskanaldicke FH auf, welche durch den Normalabstand des ersten Werkzeugelements 110 vom zweiten Werkzeugelement 120 ausgebildet ist, sowie eine Fliesskanalbreite FB, welche normal zur Fliesskanaldicke FH und zur Fliesskanallänge FL ausgerichtet ist. Die Fliesskanalbreite FB ist in einer der Fig. 5, 6, 7 sichtbar.

Die Fliesskanaldicke FH in der Mündungsöffnung 135 ist kleiner als in der Eintrittsöffnung 134. Die Mündungsöffnung 135 bildet eine Flachdüse aus. Die Innenflächen es ersten und zweiten Werkzeugelements 110, 120 können parallel zueinander verlaufen, sie können aber auch zueinander geneigt sein.

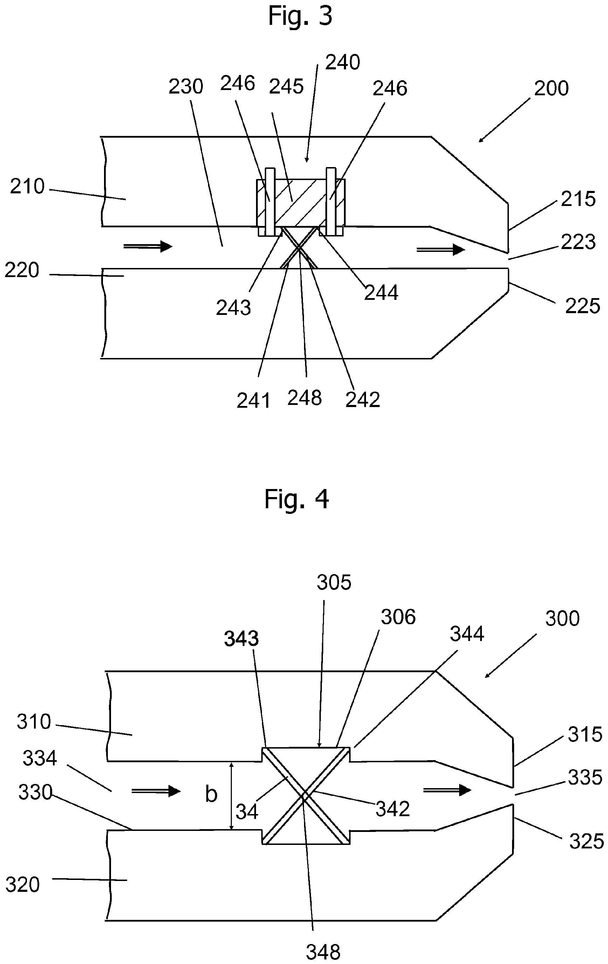

Fig. 3 zeigt eine Variante der Fig. 2 gemäss welcher nur ein Ende 144 des ersten Stegelements 141 und ein Ende 144 des zweiten Stegelements 142 mit dem entsprechenden Sockel 145 verbunden ist. Die beiden Sockel 145 sind am ersten bzw. zweiten Werkzeugelement 110, 120 befestigt. Insbesondere kann ein Befestigungsmittel 146 vorgesehen sein, mittels welchem der entsprechende Sockel 145 lösbar auf dem ersten oder zweiten Werkzeugelement 110, 120 befestigt ist. Das Befestigungsmittel 146 kann eine Schraube umfassen. Das Befestigungsmittel 146 kann von der Aussenseite des Werkzeugelements 110, 120 betätigt werden. Wenn das erste und das zweite Stegelement über das Kopplungselement 148 miteinander verbunden sind, kann auf einen der Sockel 145 verzichtet werden.

Der Abstand zwischen dem Ende 143 des ersten Stegelements 141 und dem Ende 144 des zweiten Stegelements 142 in Richtung der Längsachse wird als Projektionslänge I bezeichnet. Die Breite B des Sockels 145 ist gemäss diesem Ausführungsbeispiel kleiner als die Projektionslänge I. Die Mischerstruktur 140 ist in zumindest einem der Werkzeugelemente 110, 120 mittels eines Halteelements 105 gehalten. Das Halteelement 105 ist gemäss diesem Ausführungsbeispiel als eine Ausnehmung 106 ausgebildet, welche zur Aufnahme des Sockels 145 ausgebildet ist.

Fig. 3 zeigt einen Schnitt durch ein Folienwerkzeug 200 nach einem dritten Ausführungsbeispiel der Erfindung, welches ein erstes Werkzeugelement 210, ein zweites Werkzeugelement 220, einen sich zwischen dem ersten Werkzeugelement 210 und dem zweiten Werkzeugelement 220 erstreckenden Fliesskanal 230 für eine Kunststoffschmelze enthält. Im Fliesskanal 230 ist eine Mischerstruktur 240, welche zumindest ein erstes Stegelement 241 und ein zweites Stegelement 242 enthält, angeordnet. Das erste Stegelement 241 ist in einem Winkel zum zweiten Stegelement 242 angeordnet, wobei der Winkel zwischen dem ersten und zweiten Stegelement 241, 242 zwischen 25 Grad und 75 Grad betragen kann. Das erste Stegelement 241 und das zweite Stegelement 242 können zumindest ein Kopplungselement 248 zur Ausbildung der Mischerstruktur aufweisen. Das erste Stegelement 241 ist insbesondere kreuzweise zum zweiten Stegelement 242 angeordnet. Das Kopplungselement 248 kann im Kreuzungspunkt angeordnet sein oder den Kreuzungspunkt der Stegelemente 241, 242 ausbilden. Die Mischerstruktur 240 weist einen Sockel 245 auf. Das erste Stegelement 241 und das zweite Stegelement 242 enthalten ein Ende 243, 244, welches mit dem Sockel 245 verbunden ist. Der Sockel 245 ist am ersten Werkzeugelement 210 befestigt. Alternativ könnte der Sockel am zweiten Werkzeugelement 220 befestigt sein, was zeichnerisch nicht dargestellt ist. Ein erstes und zweites Befestigungsmittel 246 sind vorgesehen, mittels welchem der Sockel 245 lösbar auf dem ersten Werkzeugelement 210 befestigt ist. Das Befestigungsmittel 246 kann eine Schraube umfassen. Das Befestigungsmittel 246 kann von der Innenseite des Werkzeugelements 210 betätigt werden.

Der Abstand zwischen dem Ende 243 des ersten Stegelements 241 und dem Ende 244 des zweiten Stegelements 242 ist kleiner als die Breite B des Sockels 245. Jedes der Enden 243, 244 der ersten und zweiten Stegelemente 241, 242 kann mit dem Sockel 245 lösbar oder unlösbar verbunden sein. Die Mischerstruktur 240 ist somit im Werkzeugelement 210 mittels des Halteelements 205 gehalten, welches die Ausnehmung 206 umfasst. Das Halteelement 205 ist somit gemäss diesem Ausführungsbeispiel als eine Ausnehmung 206 ausgebildet, welche zur Aufnahme des Sockels 245 ausgebildet ist.

Das erste und zweite Werkzeugelement 210, 220 enthalten eine Eintrittsöffnung 234 und eine Mündungsöffnung 235. Der Fliesskanal 230 weist insbesondere eine Fliesskanallänge FL auf, die sich als kürzeste Verbindungslinie von der Eintrittsöffnung 234 bis zur Mündungsöffnung 235 erstreckt. Der Fliesskanal 230 weist eine Fliesskanaldicke FH auf, welche durch den Normalabstand des ersten Werkzeugelements 210 vom zweiten Werkzeugelement 220 ausgebildet ist, sowie eine Fliesskanalbreite FB, welche normal zur Fliesskanaldicke FH und zur Fliesskanallänge FL ausgerichtet ist. Die Fliesskanalbreite FB ist in einer der Fig. 5, 6, 7 sichtbar.

Die Fliesskanaldicke FH in der Mündungsöffnung 235 ist kleiner als in der Eintrittsöffnung 234. Die Mündungsöffnung 235 bildet eine Flachdüse aus. Die Innenflächen es ersten und/oder zweiten Werkzeugelements 210, 220 können parallel zueinander verlaufen, sie können aber auch zueinander geneigt sein. Gemäss dem vorliegenden Ausführungsbeispiel weist die Innenfläche des ersten Werkzeugelements 210 einen Abschnitt auf, der relativ zur Innenfläche des zweiten Werkzeugelements 220 geneigt ist. Ein weiterer Abschnitt der Innenfläche des Werkzeugelements 210 verläuft parallel zur Innenfläche des zweiten Werkzeugelements 220. Die Innenfläche des zweiten Werkzeugelements 220 bildet zumindest im Bereich des Fliesskanals 230 eine ebene Fläche aus.

Fig. 4 zeigt einen Schnitt durch ein Folienwerkzeug 300 nach einem vierten Ausführungsbeispiel, welches sich vom Folienwerkzeug gemäss Fig. 1 oder Fig. 2 dahingehend unterscheidet, dass die Mischerstruktur 340 in einem Halteelement 305 gehalten ist, welches als Ausnehmung 306 ausgebildet ist. Ein Folienwerkzeug 300 gemäss dem vierten Ausführungsbeispiel der Erfindung enthält ein erstes Werkzeugelement 310, ein zweites Werkzeugelement 320, einen sich zwischen dem ersten Werkzeugelement 310 und dem zweiten Werkzeugelement 320 erstreckenden Fliesskanal 330 für eine Kunststoffschmelze. Im Fliesskanal 330 ist eine Mischerstruktur 340, welche zumindest ein erstes Stegelement 341 und ein zweites Stegelement 342 enthält, angeordnet. Das erste Stegelement 341 ist in einem Winkel zum zweiten Stegelement 342 angeordnet, wobei der Winkel zwischen dem ersten und zweiten Stegelement 341, 342 zwischen 25 Grad und 75 Grad betragen kann. Das erste Stegelement 341 und das zweite Stegelement 342 können zumindest ein Kopplungselement 348 zur Ausbildung der Mischerstruktur 340 aufweisen. Das erste Stegelement 341 ist insbesondere kreuzweise zum zweiten Stegelement 342 angeordnet. Das Kopplungselement 348 kann im Kreuzungspunkt angeordnet sein oder den Kreuzungspunkt der Stegelemente 341, 342 ausbilden. Der Kreuzungspunkt teilt wie im jedes der Stegelemente 341, 342 in zwei Teilelemente, wobei die Schenkel der Teilelemente jedes Stegelements 341, 342 gleiche Länge aufweisen.

Das erste Stegelement 341 und das zweite Stegelement 342 enthalten zumindest ein Ende 343, 344, welches in der entsprechenden Ausnehmung 306 aufgenommen ist. Die Ausnehmung 306 bildet somit für dieses Ausführungsbeispiel das Halteelement aus.

Der Abstand zwischen dem Ende 343 des ersten Stegelements 341 und dem Ende 344 des zweiten Stegelements 342 kann im Wesentlichen der Breite B der Ausnehmung 306 entsprechen. Jedes der Enden 343, 344 der ersten und zweiten Stegelemente 341, 342 kann mit je einer Ausnehmung 306 verbunden sein. Die Mischerstruktur 340 ist in zumindest einem der Werkzeugelemente 310, 320 mittels eines Halteelements 305 gehalten. Das Halteelement 305 ist gemäss diesem Ausführungsbeispiel als eine Ausnehmung 306 ausgebildet, welche zur Aufnahme der Enden 343, 344 der ersten und zweiten Stegelemente 341, 342 ausgebildet ist.

Das erste und zweite Werkzeugelement 310, 320 enthalten eine Eintrittsöffnung 334 und eine Mündungsöffnung 335. Der Fliesskanal 330 weist insbesondere eine Fliesskanallänge FL auf, die sich als kürzeste Verbindungslinie von der Eintrittsöffnung 334 bis zur Mündungsöffnung 335 erstreckt. Der Fliesskanal 330 weist eine Fliesskanaldicke FH auf, welche durch den Normalabstand des ersten Werkzeugelements 310 vom zweiten Werkzeugelement 320 ausgebildet ist, sowie eine Fliesskanalbreite FB, welche normal zur Fliesskanaldicke FH und zur Fliesskanallänge FL ausgerichtet ist. Die Fliesskanalbreite FB ist in einer der Fig. 5, 6, 7 sichtbar.

Die Fliesskanaldicke FH in der Mündungsöffnung 335 ist kleiner als in der Eintrittsöffnung 334. Die Mündungsöffnung 335 bildet eine Flachdüse aus. Die Innenflächen es ersten und zweiten Werkzeugelements 310, 320 können parallel zueinander verlaufen, sie können aber auch zueinander geneigt sein.

Fig. 5 zeigt eine Draufsicht auf ein Folienwerkzeug nach einer ersten Variante, wobei das Folienwerkzeug nach einem der Ausführungsbeispiele gemäss einer der Fig. 1-4 ausgeführt sein kann. Die Bezugszeichen werden entsprechend Fig. 1 gewählt. Die Darstellung der Fig. 5 zeigt nur die Umrisse des Fliesskanals 30. Das um den Fliesskanal liegende Werkzeugelement, d.h. eines der Werkzeugelemente 10, 20 ist zur Vereinfachung dieser schematischen Darstellung weggelassen. Der Fliesskanal 30 erstreckt sich von einer Eintrittsöffnung 34 zur Mündungsöffnung 35. Fig. 5 zeigt die Fliesskanallänge FL sowie die Fliesskanalbreite FB im Bereich der Mündungsöffnung. Die Fliesskanalbreite FB nimmt von der Eintrittsöffnung 34 zur Mündungsöffnung 35 zu. Die Zunahme der Fliesskanalbreite FB erfolgt über einen Fliesskanalabschnitt, in einem weiteren Fliesskanalabschnitt ist die Fliesskanalbreite FB konstant. Insbesondere ist die Fliesskanalbreite FB in einem Fliesskanalabschnitt unmittelbar stromaufwärts der Mündungsöffnung 35 konstant. Im Fliesskanal 30 sind zwei Mischerstrukturen 40 angeordnet. Jede der Mischerstrukturen 40 bildet ein Band aus. Die Mischerstruktur 40 im sich erweiternden Fliesskanalabschnitt besteht aus zwei Bandsegmenten. Die Mischerstruktur im Abschnitt des Fliesskanals mit konstanter Fliesskanalbreite besteht aus einem einzigen Band. Jede der Mischerstrukturen 40 kann als Band oder Bandsegment ausgebildet sein, unabhängig von der Einbauposition im Werkzeugelement.

Fig. 6 zeigt eine Draufsicht auf ein Folienwerkzeug nach einer zweiten Variante, wobei das Folienwerkzeug nach einem der Ausführungsbeispiele gemäss einer der Fig. 1-4 ausgeführt sein kann. Die Bezugszeichen werden entsprechend Fig. 1 gewählt. Die Darstellung der Fig. 6 zeigt die Umrisse des Fliesskanals 30 sowie des Werkzeugelements, welches eines der Werkzeugelemente 10, 20 sein kann. Wie im vorhergehenden Ausführungsbeispiel nimmt die Fliesskanalbreite FB von der Eintrittsöffnung 34 zur Mündungsöffnung 35 zu. Die Fliesskanalbreite FB nimmt gemäss diesem Ausführungsbeispiel über einen kürzeren Fliesskanalabschnitt zu. Um die Kunststoffschmelze auf den gesamten Fliesskanalquerschnitt zu verteilen, wird ein Leitelement im Fliesskanal vorgesehen. In Fig. 6 sind zwei derartige Leitelemente beispielhaft dargestellt. Eines dieser Leitelemente ist als Inselfeld 36 ausgebildet, ein weiteres Leitelement ist als Staubalken 37 ausgebildet. Zusätzlich werden zwei Mischerstrukturen 40 vorgesehen, welche parallel zueinander angeordnet sind.

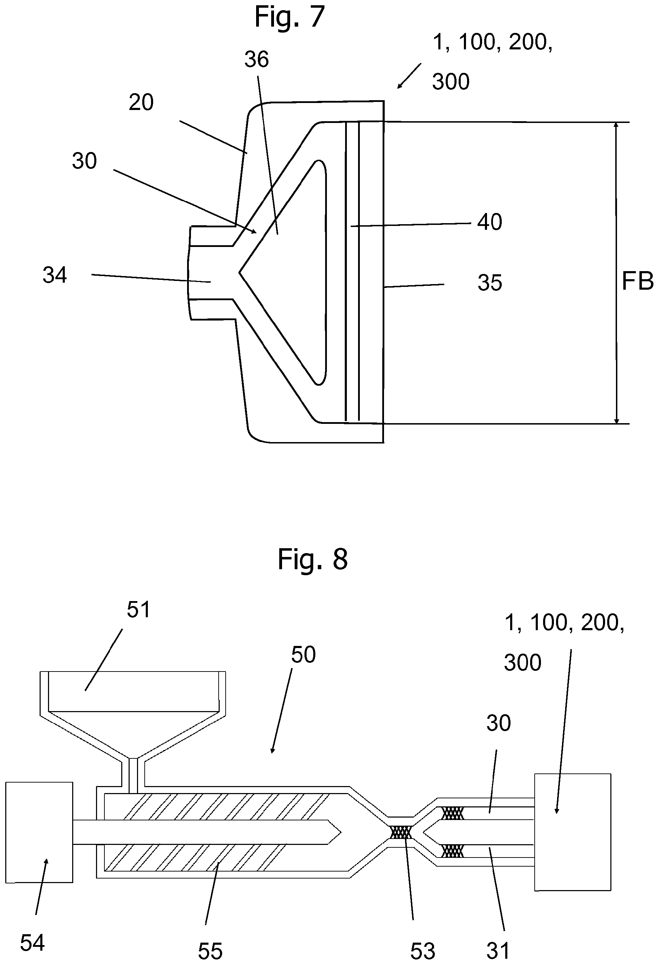

Fig. 7 zeigt eine Draufsicht auf ein Folienwerkzeug nach einer dritten Variante, wobei das Folienwerkzeug nach einem der Ausführungsbeispiele gemäss einer der Fig. 1-4 ausgeführt sein kann. Die Bezugszeichen werden entsprechend Fig. 1 gewählt. Die Darstellung der Fig. 7 zeigt die Umrisse des Fliesskanals 30 sowie des Werkzeugelements, welches eines der Werkzeugelemente 10, 20 sein kann. Wie im vorhergehenden Ausführungsbeispiel nimmt die Fliesskanalbreite FB von der Eintrittsöffnung 34 zur Mündungsöffnung 35 zu. Die Fliesskanalbreite FB nimmt gemäss diesem Ausführungsbeispiel über einen kürzeren Fliesskanalabschnitt zu als im Ausführungsbeispiel gemäss Fig. 5. Zudem ist der Fliesskanalabschnitt mit konstanter Fliesskanalbreite FB kürzer als in Fig. 6. Um die Kunststoffschmelze auf den gesamten Fliesskanalquerschnitt zu verteilen, wird ein Leitelement im Fliesskanal vorgesehen, welches als Inselfeld 36 ausgebildet ist. Eine Mischerstruktur 40 wird im Fliesskanalabschnitt mit konstanter Fliesskanalbreite FB vorgesehen. Die Mischerstruktur 40 ist als Band ausgebildet, welches sich über die ganze Fliesskanalbreite erstreckt. Das Band weist insbesondere eine Breite auf, die weniger als 10-mal der Fliesskanaldicke FH beträgt.

Das Folienwerkzeug 1, 100, 200, 300 kann gemäss Fig. 8 Bestandteil eines Extruders 50 zum Erzeugen einer Kunststoffschmelze, insbesondere einer schäumbaren oder geschäumten Kunststoffschmelze sein. Der Extruder kann einen Aufgabebehälter 51 für einen Kunststoff, eine optionale Einspeisevorrichtung zur Einspeisung eines Treibmittels in eine vom Extruder erzeugte Kunststoffschmelze, eine Mischvorrichtung 53 zum Mischen der Kunststoffschmelze und gegebenenfalls des Treibmittels mit der Kunststoffschmelze sowie ein Folienwerkzeug 1 nach einem der vorhergehenden Ausführungsbeispiele enthalten.

Der Extruder 50 weist ein Schneckenelement 55 auf, welches über einen zugehörigen Antrieb 54 antreibbar ist. Der Kunststoff kann dem Extruder über den Aufgabebehälter 51 zugeführt werden. Wenn eine Einspeisevorrichtung für ein Treibmittel vorgesehen ist, ist diese Einspeisevorrichtung stromabwärts des Aufgabebehälters 51 angeordnet. Gemäss einer zeichnerisch nicht dargestellten Variante kann ein erster Extruder, ein zweiter Extruder sowie ein Verbindungselement in Form einer Transferleitung vorgesehen sein, welche den ersten Extruder mit dem zweiten Extruder verbindet. Jeder der Extruder kann den gleichen Aufbau haben, wie der in Fig. 8 dargestellte Extruder 50.

Eine treibmittelhaltige Kunststoffschmelze ist am Austritt oder im Anschluss an das Folienwerkzeug 1, 100, 200, 300 zu einer zumindest teilweise aufgeschäumten Kunststoffschmelze transformierbar.

Die Stegelemente nach jedem der Ausführungsbeispiele können einer ersten und einer zweiten Stegelementgruppe zugeordnet sein. Die Mischerstruktur kann als ein statischer Mischer ausgebildet sein. Die Mischerstruktur kann eine erste Gruppe von Stegelementen sowie eine zweite Gruppe von Stegelementen umfassen. Jede Gruppe kann eine Mehrzahl von Stegelementen umfassen. Je nach der Breite der Stegelemente und der Fliesskanalbreite FB können 1 bis 100, vorzugsweise 1 bis 50 Stegelemente zu einer Gruppe gehören. Die Stegelemente, die zu einer Gruppe gehören, sind dadurch gekennzeichnet, dass sie parallel zueinander angeordnet sind. Die in Richtung der auftreffenden Kunststoffschmelzeströmung ausgerichteten Seitenflächen der Stegelemente spannen nach einem Ausführungsbeispiel eine gemeinsame Ebene auf.

Die Stegelemente der ersten Gruppe kreuzen sich vorzugsweise mit den Stegelementen der zweiten Gruppe. Ein Stegelement der ersten Gruppe schliesst gemäss diesem Ausführungsbeispiel an ein Stegelement der zweiten Gruppe an. Das Stegelement der ersten Gruppe ist somit kreuzweise zum Stegelement der zweiten Gruppe angeordnet. Die Stegelemente der ersten Gruppe wechseln somit mit den Stegelementen der zweiten Gruppe ab. Die ersten und zweiten Gruppen können je eine Ebene aufspannen, die in einem Neigungswinkel von 25 bis 75 Grad zur Innenfläche eines Werkzeugelements geneigt ist. In der vorliegenden Darstellung beträgt der Winkel 30 bis 60 Grad, in vielen Fällen im Wesentlichen 45 Grad.

Die Stegelemente sind an ihrem ersten Ende mit dem Sockel 45, 145, 245 verbunden oder in der Ausnehmung 6, 106, 206, 306 aufgenommen. An ihrem zweiten Ende sind die Stegelemente ebenfalls mit einem Sockel 45, 145, 245 verbunden, in einer Ausnehmung 6, 106, 206, 306 gehalten oder liegen auf der Oberfläche des entsprechenden Werkzeugelements auf. Stegelemente können einen oder mehrere Kanäle aufweisen, die von einem Wärmeträgerfluid durchströmt werden können oder die als Führungen für ein Verbindungsmittel oder Befestigungsmittel verwendet werden können. Die Werkzeugelemente und/oder die Sockel können einen Verteilerkanal für die Verteilung eines Wärmeträgerfluids oder einen Sammelkanal für die Zusammenführung des Wärmeträgerfluids von einer Mehrzahl an Ableitungskanälen enthalten. Beispielsweise stehen je ein Zuleitungskanal und ein Ableitungskanal mit dem ersten und zweiten Ende des Stegelements in fluidleitender Verbindung. Für jedes der Stegelemente, die Kanäle enthalten, ist mindestens ein Zuleitungskanal vorgesehen, welcher das Wärmeträgerfluid dem entsprechenden Kanal im Stegelement zuführt und ein Ableitungskanal, welcher das Wärmeträgerfluid vom Kanal im Stegelement in einen Sammelkanal leitet. Das Wärmeträgerfluid wird in diesem Fall durch das den Sockel und/oder das Werkzeugelement zugeführt und/oder abgeführt.

Die in den Stegelementen verlaufenden Kanäle können ovalen oder kreisförmigen Querschnitt aufweisen. Die Kanäle können auch andere Querschnittsflächen aufweisen, beispielsweise mit einer dreieckigen, viereckigen oder mehreckigen, Querschnittsfläche.

Alternativ oder ergänzend zu den vorherigen Ausführungsbeispielen kann somit das Folienwerkzeug (1, 100, 200, 300) ein erstes Werkzeugelement (10, 110, 210, 310), ein zweites Werkzeugelement (20, 120, 220, 320), einen sich zwischen dem ersten Werkzeugelement (10, 110, 210, 310) und dem zweiten Werkzeugelement (20, 120, 220, 320) erstreckenden Fliesskanal (30, 130, 230, 330) für eine Kunststoffschmelze enthalten, wobei das erste und/oder zweite Werkzeugelement (10, 20, 110, 120, 210, 220, 310, 320) eine Eintrittsöffnung (34, 134, 234, 334) und eine Mündungsöffnung (35, 135, 235, 335) enthalten, wobei der Fliesskanal (30, 130, 230, 330) eine Fliesskanallänge FL aufweist, wobei der Fliesskanal (30, 130, 230, 330) eine Fliesskanaldicke FH aufweist, welche durch den Normalabstand des ersten Werkzeugelements (10, 110, 210, 310) vom zweiten Werkzeugelement (20, 120, 220, 320) ausgebildet ist, sowie eine Fliesskanalbreite FB, welche normal zur Fliesskanaldicke FH und zur Fliesskanallänge FL ausgerichtet ist, wobei die Fliesskanalbreite FB von der Eintrittsöffnung (34, 134, 234, 334) zur Mündungsöffnung (35, 135, 235, 335) zumindest abschnittweise zunimmt, sodass die Fliesskanalbreite FB an der Mündungsöffnung (35, 135, 235, 335) grösser als an der Eintrittsöffnung (34, 134, 234, 334) ist, wobei Fliesskanalbreite FB stromaufwärts der Mündungsöffnung (35, 135, 235, 335) in einem Fliesskanalabschnitt konstant ist, wobei im Fliesskanalabschnitt mit konstanter Fliesskanalbreite FB eine Mischerstruktur (40, 140, 240, 340) angeordnet ist.

Insbesondere kann ein Leitelement (36, 37) im Fliesskanal angeordnet sein. Das Leitelement kann als Inselfeld (36) ausgebildet sein. Das Leitelement (36, 37) kann stromaufwärts der Mischerstruktur (40,140, 240, 340) angeordnet sein.
die Mischerstruktur (40, 140, 240, 340) kann sich über die Fliesskanalbreite FB erstrecken. Die Mischerstruktur (40, 140, 240, 340) kann ein Band oder Bandsegment enthalten. Das Band kann eine Breite aufweisen, die weniger als 10mal der Fliesskanaldicke FH beträgt.

Die Mischerstruktur (40,140, 240) kann mindestens einen Sockel (45, 145, 245) aufweisen, wobei der Sockel (45, 145, 245) an zumindest einem der ersten oder zweiten Werkzeugelemente (10, 20, 110, 120, 210, 220) befestigt ist.

Die Mischerstruktur kann eine Mischerstrukturprojektionsfläche aufweisen, wobei der Sockel eine Sockelprojektionsfläche aufweist, wobei die Mischerstrukturprojektionsfläche und die Sockelprojektionsfläche normal zur Fliesskanaldicke FH ausgerichtet sind, wobei die Sockelprojektionsfläche nicht grösser als 10-mal der Mischerstrukturprojektionsfläche ist.

Die Mischerstruktur kann zumindest ein erstes Stegelement (41, 141, 241, 341) und ein zweites Stegelement (42, 142, 242, 342) enthalten, wobei das erste Stegelement (41, 141, 241, 341) kreuzweise zum zweiten Stegelement (42, 142, 242, 342) angeordnet sein kann. Zumindest eines der ersten Stegelemente (41, 141, 241) und der zweiten Stegelemente (42, 142, 242) kann zumindest ein Ende (43, 44, 143, 144, 243, 244) enthalten, welches mit dem Sockel (45, 145, 245) verbunden ist.

Die Mischerstruktur kann in zumindest einem der Werkzeugelemente (10, 20, 110, 120, 210, 220, 310, 320) mittels eines Halteelements (5, 105, 205, 305) gehalten sein. Das Halteelement (5, 105, 205, 305) kann eine Ausnehmung (6, 106, 206, 306) umfassen. Der Sockel (45, 145, 245) kann im Halteelement (5, 105, 205) aufgenommen sein oder als Halteelement (5, 105, 205) ausgebildet sein.

Der Sockel kann ein Befestigungsmittel (46, 146, 246) zur Verbindung mit einem Werkzeugelement (10, 20, 110, 120, 210, 220) enthalten.

Für den Fachmann ist offensichtlich, dass viele weitere Modifikationen zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind.

## Patentansprüche

1. Folienwerkzeug (1, 100, 200, 300) enthaltend ein erstes Werkzeugelement (10, 110, 210, 310), ein zweites Werkzeugelement (20, 120, 220, 320), wobei das erste und zweite Werkzeugelement (10, 20, 110, 120, 210, 220, 310, 320) eine Eintrittsöffnung (34, 134, 234, 334) und eine Mündungsöffnung (35, 135, 235, 335) enthalten, sowie einen sich zwischen dem ersten Werkzeugelement (10, 110, 210, 310) und dem zweiten Werkzeugelement (20, 120, 220, 320) von der Eintrittsöffnung (34, 134, 234, 334) zur Mündungsöffnung (35, 135, 235, 335) erstreckenden Fliesskanal (30, 130, 230, 330) für eine Kunststoffschmelze enthalten, wobei im Fliesskanal (30, 130, 230, 330) eine Mischerstruktur (40,140, 240, 340) angeordnet ist, welche einen Sockel (45, 145, 245), zumindest ein erstes Stegelement (41, 141, 241, 341) und ein zweites Stegelement (42, 142, 242, 342) enthält, **dadurch gekennzeichnet, dass** die Mischerstruktur in zumindest einem der Werkzeugelemente (10, 20, 110, 120, 210, 220, 310, 320) mittels eines Halteelements (5, 105, 205, 305) gehalten ist, wobei die Projektionslänge I der Mischerstruktur (40, 140, 240, 340) grösser oder im Wesentlichen gleich der Breite B des Halteelements (5, 105, 205, 305) ist, wobei das erste Stegelement (41, 141, 241) und das zweite Stegelement (42, 142, 242) zumindest ein Ende (43, 44, 143, 144, 243, 244) enthalten, welches mit dem Sockel (45, 145, 245) verbunden ist, wobei der Sockel (45, 145, 245) an zumindest einem der ersten oder zweiten Werkzeugelemente (10, 20, 110, 120, 210, 220) befestigt ist.

2. Folienwerkzeug nach Anspruch 1, wobei das Halteelement (5, 105, 205, 305) eine Ausnehmung (6, 106, 206, 306) zur Aufnahme zumindest eines der ersten oder zweiten Stegelemente (41, 42, 141, 142, 241, 242, 342, 343) umfasst.

3. Folienwerkzeug nach einem der Ansprüche 1 oder 2, wobei der Sockel (45, 145, 245) im Halteelement (5, 105, 205) aufgenommen ist oder als Halteelement (5, 105, 205) ausgebildet ist.

4. Folienwerkzeug nach einem der vorhergehenden Ansprüche, wobei das erste Stegelement (41, 141, 241, 341) kreuzweise zum zweiten Stegelement (42, 142, 242, 342) angeordnet ist.

5. Folienwerkzeug nach einem der vorhergehenden Ansprüche, wobei die Mischerstruktur (40, 140, 240, 340) ein Band oder Bandsegment enthält.

6. Folienwerkzeug nach einem der vorhergehenden Ansprüche, wobei der Fliesskanal (30, 130, 230, 330) eine Fliesskanallänge FL aufweist, die sich als kürzeste Verbindungslinie von der Eintrittsöffnung (34, 134, 234, 334) bis zur Mündungsöffnung (35, 135, 235, 335) erstreckt, wobei der Fliesskanal (30, 130, 230, 330) eine Fliesskanaldicke FH aufweist, welche durch den Normalabstand des ersten Werkzeugelements (10, 110, 210, 310) vom zweiten Werkzeugelement (20, 120, 220, 320) ausgebildet ist, sowie eine Fliesskanalbreite FB, welche normal zur Fliesskanaldicke FH und zur Fliesskanallänge FL ausgerichtet ist.

7. Folienwerkzeug nach Anspruch 6, wobei die Fliesskanalbreite FB an der Mündungsöffnung (35, 135, 235, 335) grösser als an der Eintrittsöffnung (34, 134, 234, 334) ist.

8. Folienwerkzeug nach einem der Ansprüche 6 oder 7, wobei sich die Mischerstruktur (40, 140, 240, 340) über die Fliesskanalbreite FB erstreckt.

9. Folienwerkzeug nach einem der Ansprüche 6 bis 8, wobei das Band eine Breite aufweist, die weniger als 10-mal der Fliesskanaldicke FH beträgt.

10. Folienwerkzeug nach einem der Ansprüche 6 bis 9, wobei die Fliesskanalbreite FB von der Eintrittsöffnung (34, 134, 234, 334) zur Mündungsöffnung (35, 135, 235, 335) zumindest abschnittweise zunimmt, sodass die Fliesskanalbreite FB an der Mündungsöffnung (35, 135, 235, 335) grösser als an der Eintrittsöffnung (34, 134, 234, 334) ist.

11. Folienwerkzeug nach Anspruch 10, wobei Fliesskanalbreite FB stromaufwärts der Mündungsöffnung (35, 135, 235, 335) in einem Fliesskanalabschnitt konstant ist, wobei im Fliesskanalabschnitt mit konstanter Fliesskanalbreite FB die Mischerstruktur (40, 140, 240, 340) angeordnet ist.

12. Folienwerkzeug nach einem der vorhergehenden Ansprüche, wobei ein Leitelement (36, 37) im Fliesskanal angeordnet ist.

13. Folienwerkzeug nach Anspruch 12, wobei das Leitelement als Inselfeld (36) ausgebildet ist.

14. Folienwerkzeug nach Anspruch 12, wobei das Leitelement (36, 37) stromaufwärts der Mischerstruktur (40, 140, 240, 340) angeordnet ist.

15. Folienwerkzeug nach einem der vorhergehenden Ansprüche, wobei der Fliesskanal (30) eine Fliesskanaldicke (FH)aufweist, und die Fliesskanaldicke (FH) in der Mündungsöffnung (35) kleiner ist als in der der Eintrittsöffnung (34), und wobei durch die Mündungsöffnung (35, 135, 235, 335) eine Flachdüse ausgebildet ist.

## Claims

1. Film die (1, 100, 200, 300) comprising a first tool element (10, 110, 210, 310), a second tool element (20, 120, 220, 320), wherein the first and second tool elements (10, 20, 110, 120, 210, 220, 310, 320) include an inlet opening (34, 134, 234, 334) and an outlet opening (35, 135, 235, 335), and a flow channel (30, 130, 230, 330) for a polymer melt extending between the first tool element (10, 110, 210, 310) and the second tool element (20, 120, 220, 320) from the inlet opening (34, 134, 234, 334) to the outlet opening (35, 135, 235, 335), wherein a mixer structure (40, 140, 240, 340) is arranged in the flow channel (30, 130, 230, 330), which contains a base (45, 145, 245), at least a first web element (41, 141, 241, 341) and a second web element (42, 142, 242, 342), **characterized in that** the mixer structure in at least one of the tool elements (10, 20, 110, 120, 210, 220, 310, 320) is held by means of a holding element (5, 105, 205, 305), whereby the length of projection I of the mixer structure (40, 140, 240, 340) is greater or substantially equal to the width B of the holding element (5, 105, 205, 305), wherein the first web element (41, 141, 241) and the second web element (42, 142, 242) comprise at least an end (43, 44, 143, 144, 243, 244) which is connected to the base (45, 145, 245), whereby the base (45, 145, 245) is attached to at least one of the first or second tool elements (10, 20, 110, 120, 210, 220).

2. The film die of claim 1, wherein the holding element (5, 105, 205, 305) comprises a cut-out (6, 106, 206, 306) for receiving at least one of the first or second web elements (41, 42, 141, 142, 241, 242, 342, 343).

3. The film die of one of claims 1 or 2, wherein the base (45, 145, 245) is received in the holding element (5, 105, 205) or is configured as the holding element (5, 105, 205).

4. The film die of one of the preceding claims, wherein the first web element (41, 141, 241, 341) is arranged crosswise to the second web element (42, 142, 242, 342).

5. The film die of one of the preceding claims, wherein the mixer structure (40, 140, 240, 340) comprises a ribbon or a ribbon segment.

6. The film die of one of the preceding claims, wherein the flow channel (30, 130, 230, 330) has a flow channel length FL, which extends from the inlet opening (34, 134, 234, 334) to the outlet opening (35, 135, 235, 335) as the shortest connection line, wherein the flow channel (30, 130, 230, 330) has a flow channel thickness FH, which is configured as the normal distance of the first tool element (10, 110, 210, 310) to the second tool element (20, 120, 220, 320), as well as a flow channel width FB, which extends normally to the flow channel thickness FH and the flow channel length FL.

7. The film die of claim 6, wherein the flow channel width FB at the outlet opening (35, 135, 235, 335) is greater than at the inlet opening (34, 134, 234, 334).

8. The film die of one of claims 6 or 7, wherein the mixer structure (40, 140, 240, 340) extends over the flow channel width FB.

9. The film die of one of claims 6 to 8, wherein the ribbon has a width (B) which corresponds to less than 10 times of the flow channel thickness FH.

10. The film die of one of claims 6 to 9, wherein the flow channel width FB increases at least sectionally from the inlet opening (34, 134, 234, 334) to the outlet opening (35, 135, 235, 335), so that the flow channel width FB at the outlet opening (35, 135, 235, 335) is greater than at the inlet opening (34, 134, 234, 334).

11. The film die of claim 10, wherein the flow channel width FB upstream of the outlet opening (35, 135, 235, 335) is constant in a flow channel section, wherein the mixer structure (40, 140, 240, 340) is arranged in the flow channel section of constant flow channel width FB.

12. The film die of one of the preceding claims, wherein a guiding element (36, 37) is arranged in the flow channel.

13. The film die of claim 12, wherein the guiding element is configured as an island array (36).

14. The film die of claim 12, wherein the guiding element (36, 37) is arranged upstream of the mixer structure (40,140, 240, 340).

15. The film die of one of the preceding claims, wherein the flow channel (30) has a flow channel thickness (FH) and the flow channel thickness (FH) in the outlet opening (35) is smaller than in the inlet opening (34), and whereby a flat nozzle is formed by the outlet opening (35, 135, 235, 335).

## Revendications

1. Outil de film (1, 100, 200, 300) contenant un premier élément d'outil (10, 110, 210, 310), un deuxième élément d'outil (20, 120, 220, 320), dans lequel le premier et le deuxième élément d'outil ( 10, 20, 110, 120, 210, 220, 310, 320) contiennent une ouverture d'entrée (34, 134, 234, 334) et une ouverture de sortie (35, 135, 235, 335) et un canal d'écoulement (30, 130, 230, 330) pour une matière plastique fondue formant un passage entre le premier élément d'outil (10, 110, 210, 310) et le deuxième élément d'outil (20, 120, 220, 320) prolongeant depuis l'ouverture d'entrée (34, 134, 234, 334) jusqu'à l'ouverture de sortie (35 , 135, 235, 335), en ce qu'une structure de mélangeur (40, 140, 240, 340) est disposée dans le canal d'écoulement (30, 130, 230, 330) qui comprend une base (45, 145, 245), au moins un premier élément ailette (41, 141, 241, 341) et un deuxième élément ailette (42, 142, 242, 342) **caractérisé en ce que** la structure du mélangeur est maintenue dans au moins un des éléments d'outil (10, 20, 110, 120, 210, 220, 310, 320) au moyen d'un élément de maintien (5, 105, 205, 305), **en ce que** la longueur de projection I de la structure de mélangeur (40, 140, 240, 340) est supérieure ou sensiblement égale à la largeur B de l'élément de maintien (5, 105, 205, 305), **en ce que** le premier élément ailette (41, 141, 241) et le deuxième élément ailette (42, 142, 242) contiennent au moins une extrémité (43, 44, 143, 144, 243, 244) reliée à la base (45, 145, 245), **en ce que** la base (45, 145, 245 ) est attaché à au moins l'un des premier et deuxième éléments d'outil (10, 20, 110, 120, 210, 220).

2. Outil de film selon la revendication 1, dans lequel l'élément de maintien (5, 105, 205, 305) présente un évidement (6, 106, 206, 306) pour recevoir au moins l'un des premier ou deuxième éléments ailette (41, 42, 141, 142, 241, 242, 342, 343).

3. Outil de film selon l'une des revendications 1 ou 2, dans lequel la base (45, 145, 245) est logée dans l'élément de maintien (5, 105, 205) ou est conçue comme un élément de maintien (5, 105, 205).

4. Outil de film selon l'une des revendications précédentes, dans lequel le premier élément ailette (41, 141, 241, 341) est disposé transversalement au deuxième élément ailette (42, 142, 242, 342).

5. Outil de film selon l'une des revendications précédentes, dans lequel la structure de mélangeur (40, 140, 240, 340) contient une bande ou un segment de bande.

6. Outil de film selon l'une des revendications précédentes, dans lequel le canal d'écoulement (30, 130, 230, 330) a une longueur de canal d'écoulement FL, qui est la ligne de raccordement la plus courte depuis l'ouverture d'entrée (34, 134, 234, 334) à l'ouverture de sortie (35, 135 , 235, 335), le canal d'écoulement (30, 130, 230, 330) ayant une épaisseur de canal d'écoulement FH qui est déterminée par la distance perpendiculaire entre le premier élément d'outil (10, 110, 210, 310) et le deuxième élément d'outil (20, 120, 220, 320), ainsi qu'une largeur de canal d'écoulement FB, qui est alignée perpendiculairement à l'épaisseur du canal d'écoulement FH et à la longueur du canal d'écoulement FL.

7. Outil de film selon la revendication 6, dans lequel la largeur du canal d'écoulement FB au niveau de l'ouverture de sortie (35, 135, 235, 335) est supérieure à celle au niveau de l'ouverture d'entrée (34, 134, 234, 334).

8. Outil de film selon l'une des revendications 6 ou 7, dans lequel la structure de mélangeur (40, 140, 240, 340) s'étend sur la largeur du canal d'écoulement FB.

9. Outil de film selon l'une des revendications 6 à 8, dans lequel la bande a une largeur qui est inférieure à 10 fois de l'épaisseur du canal d'écoulement FH.

10. Outil de film selon l'une des revendications 6 à 9, dans lequel la largeur du canal d'écoulement FB augmente au moins par sections depuis l'ouverture d'entrée (34, 134, 234, 334) jusqu'à l'ouverture de sortie (35, 135, 235, 335), de sorte que la largeur du canal d'écoulement FB au niveau de l'ouverture de sortie (35, 135, 235, 335) est plus grande qu'au niveau de l'ouverture d'entrée (34, 134, 234, 334).

11. Outil de film selon la revendication 10, dans lequel la largeur du canal d'écoulement FB en amont de l'orifice (35, 135, 235, 335) est constante dans une section de canal d'écoulement, en ce que la structure de mélangeur (40, 140, 240, 340) est agencée dans la section de canal d'écoulement avec une largeur de canal d'écoulement constante FB.

12. Outil de film selon l'une des revendications précédentes, dans lequel un élément de guidage (36, 37) est agencé dans le canal d'écoulement.

13. Outil de film selon la revendication 12, dans lequel l'élément de guidage est configuré sous forme d'îlot (36).

14. Outil de film selon la revendication 12, dans lequel l'élément de guidage (36, 37) est disposé en amont de la structure de mélangeur (40, 140, 240, 340).

15. Outil de film selon l'une des revendications précédentes, dans lequel le canal d'écoulement (30) a une épaisseur de canal d'écoulement (FH) et l'épaisseur de canal d'écoulement (FH) dans l'ouverture de sortie (35) est inférieure à celle dans l'ouverture d'entrée (34), et une buse plate est formée par l'ouverture de sortie (35, 135, 235, 335).
